# EUROPEAN PATENT APPLICATION

(11) **EP 0 791 420 A1**
(43) Date of publication of application: **27.08.1997**
(21) Application number: 97102708.1
(22) Date of filing: 19.02.1997
(51) Int. Cl.: B23B 27/10, B23Q 11/10

(54) **Cutting tool**

(30) Priority: 28.02.1996 JP 41004/96; 09.07.1996 JP 179426/96; 06.01.1997 JP 124/97
(71) Applicant: Sumitomo Electric Industries, Ltd., Osaka 541 (JP)
(72) Inventor: Kimora, Kazuyoshi, 1-1, Koyakita 1-chome, Itami-shi Hyogo (JP); Mori, Hideo, 1-1, Koyakita 1-chome, Itami-shi Hyogo (JP); Handa, Keizi, 1-1, Koyakita 1-chome, Itami-shi Hyogo (JP)
(74) Representative: Eder, Eugen, Dipl.-Ing.

(57) **Abstract**

A cutting tool having an oil feed mechanism that can supply cutting oil to a target area of an insert with the highest efficiency, irrespective of whether the insert is a throwaway or brazed type. A plate member is screwed or otherwise fixed to a cutting tool body having a cutting oil supply hole therein. The plate member has a recess that defines an oil passage between the plate member and the tool body when the former is mounted on the latter. Cutting oil is supplied through the oil supply hole into the oil passage defined by the recess in the plate member, deflected in the oil passage, and discharged through an oil discharge port toward a cutting edge.

## Description

### BACKGORUND OF THE INVENTION

This invention relates to a cutting tool having a cutting insert and a body (shank) having a cutting oil hole or a body (holder) for dry cutting, and an oil feed means which can effectively supply cutting oil to the flank of the cutting insert.

Wet cutting is carried out while supplying cutting oil to a cutting area. If supplied to a rake face of the insert, cutting oil improves the chip disposal efficiency and restrain wear of the rake face. If supplied to a flank, it restrains wear of the flank. Thus, it is desirable to supply cutting oil to both the rake face and the flank. The life of a tool is largely influenced by the degree of wear on the flank. Also, the roughness of the finished surface of the workpiece depends on how well the flank is lubricated. Thus, it is also effective to supply cutting oil only to the flank.

But in ordinary cutting, in which cutting oil is supplied from a turret of a machine tool through a hose or nozzle which is synchronized with the feed of the tool, it is difficult to feed cutting oil accurately to the cutting edge. It was especially difficult to effectively supply cutting oil to the flank because the workpiece is in the way.

Various techniques have been proposed to solve these problems. For example, Unexamined Japanese Patent Publication 5-237706 proposes to form a recess in the flank of an insert and provide the holder with a cooling fluid duct and an outlet communicating with the duct and the recess to feed cutting oil through the recess to a wear-prone area of the flank. Unexamined Japanese Utility Model Publication 56-11003 proposes to provide a recess in a seat provided on a plate member or the holder. The recess has an oil discharge port directed toward the flank of an insert. Cutting oil flows through an oil hole in the holder into the recess and is discharged from the oil discharge port of the recess toward the cutting area and its visinity.

The technique disclosed in Unexamined Japanese Patent Publication 5-237706 has a problem in that the recess formed in the flank lowers the strength of the cutting edge, making the cutting edge more likely to chip. Also, such a special insert is difficult to manufacture and thus costly.

In the arrangement disclosed in Unexamined Utility Model Publication 56-11003, the oil discharge port of the recess opens laterally forwardly, so that cutting oil first collides with the workpiece and is deflected. Only part of the deflected cutting oil will reach the flank. Thus, it is difficult to sufficiently cool and lubricate the flank. The flank thus tends to be worn rather quickly. The roughness of the finished surface will not improve sufficiently. The recess of the above type can be formed in a cutting tool of the type that uses throwaway inserts but not in a cutting tool of the type to which inserts are brazed. That is, this arrangement is applicable only to cutting tools of a throwaway insert type.

An object of this invention is to provide a solution to these problems.

Either of the above conventional arrangements is an internally oil feed type, so that an oil hole has to be formed in the body. Thus, this arrangement is not applicable to less expensive dry cutting tools. A second object of the invention is to solve this problem.

### SUMMARY OF THE INVENTION

According to this invention, there is provided a cutting tool comprising a body having a cutting edge and an oil hole for supplying cutting oil, and a plate member mounted on a tip of the body and having a recess defining an oil passage between the plate member and the body, the oil hole communicating with the oil passage, the oil passage having an outlet serving as an oil discharge port through which cutting oil is discharged, the oil discharge port being directed toward the cutting edge (this is the first type).

A cutting tool comprising a body provided with a seat at its tip, a cutting insert mounted on the seat of the body, an oil feed piece mounted on a bottom of the body, the oil feed piece having an inlet for cutting oil and an oil discharge port communicating with the inlet, the oil discharge port being provided at an overhanging portion of the oil feed piece protruding from the bottom of the body, said oil discharge port being directed toward a flank of the cutting insert (this is the second type).

The oil discharge port may be provided so that cutting oil will be supplied only to a cutting edge portion of a rake face or a side flank, which is mainly used for cutting. But more preferably, the oil discharge port may be provided so that cutting oil is supplied to both a side flank and a front flank, or to all three sides, i.e. side flank, front flank and rake face.

In the first type of cutting tool, the oil discharge port is provided by a plate member mounted on the top face of the body of the cutting tool, the side of the side flank, or a side adjacent the side flank side to discharge cutting oil toward an intended cutting edge portion. Such a plate member may also be provided on the bottom of the body to form the oil discharge port in the overhanging portion of the plate member, i.e. its portion protruding from the bottom of the body.

The cutting tool of either type may have a single or a plurality of oil discharge ports. Its shape is not limited. But if higher oil discharge pressure is needed, such a port or ports may have a small diameter of 1-1.5 mm.

In order to supply cutting oil to both a side flank and a front flank near the nose of the cutting edge, the oil discharge port may be formed by a plate member mounted on adjacent two sides or the bottom of the body of the cutting tool of the first type. In the second type of cutting tool, a single L-shaped oil discharge port may be formed so as to correspond in shape to the nose of the cutting edge for the same purpose.

In either type, the plate member or oil feed piece should be inside of the cutting edge as viewed from over the cutting tool.

For the first type of cutting tool in which the plate member is mounted on the bottom of the body, and for the second type of cutting tool, an oil dispersion preventive wall is preferably provided around the oil discharge port.

The plate member or oil feed piece is preferably mounted on the body by screwing. In this case, screw holes formed in the plate member or oil feed piece may be preferably elongated holes.

In the first type of cutting tool, a seal member may be provided between the body and the plate member to prevent leakage of oil around the oil passage.

The cutting tool of this invention has a cutting oil discharge port provided between the tool body and the plate member mounted on the tool body, or in the overhanging portion of the plate member or the oil feed piece. Thus, there is no need to use a special insert having a recess, which can reduce the strength of a cutting edge. This arrangement is applicable to both cutting tools of a throwaway insert type and cutting tools of a brazed insert type.

Since cutting oil is directly discharged at the flank of the insert from the oil discharge port, it is possible to effectively cool and lubricate the flank with minimum loss, and thus to minimize the wear of the flank and to form a smooth finished surface.

In the second type of cutting tool, the oil feed path is formed by the oil feed piece. This makes it possible to use a conventional cutting tool holder for dry cutting, which is less expensive than an internally oil feed type of tool body.

By providing the plate member or the oil feed piece inside of the cutting edge as viewed from over the cutting tool, it is possible to provide the oil discharge port with the plate member or oil feed piece not interfering with the workpiece. Also, the position of the oil discharge port is not limited. By providing the oil dispersion preventive wall, it is possible to supply cutting oil more stably to an intended area.

By using an L-shaped oil discharge port, it is possible to cool and lubricate the entire area of the flank that is used for cutting and thus increase the cooling and lubricating effects to maximum.

By screwing the plate member or oil feed piece to the tool body, it is possible to easily replace the plate member or oil feed piece with a new one by detaching it from the tool body. By forming elongated screw holes in the oil feed piece or plate member, it is possible to adjust the degree of opening of the oil discharge port and thus the oil discharge pressure by changing the overhang of the plate member or the oil feed piece within the range determined by the play present between the screws and the elongated holes. Such elongated screw holes may be formed in the plate member mounted on the side of the tool body so that the position of the oil discharge port and the distance between the oil discharge port and the flank are finely adjustable.

Other features and objects of the present invention will become apparent from the following description made with reference to the accompanying drawings, in which:

### BRIEF DESCRIPTION OF THE DRAWINTS

Fig. 1 is a perspective view of one embodiment of the cutting tool according to this invention;
Fig. 2 is a perspective view of a plate member of the cutting tool of Fig. 1;
Fig. 3 is a sectional view taken along line X-X of Fig. 1;
Fig. 4 is a perspective view of another embodiment;
Fig. 5 is an exploded perspective view of still another embodiment;
Fig. 6 is a perspective view of a plate member and a cover plate of the cutting tool of Fig. 5;
Fig. 7 is a perspective view of a portion of another embodiment;
Fig. 8 is a plan view of a further embodiment;
Fig. 9 is a side view of the cutting tool of Fig. 8;
Fig. 10 is a sectional view taken along line Y-Y of Figs. 8 and 9;
Fig. 11 is a perspective view of another embodiment of the cutting tool with the oil feed piece removed;
Fig. 12 is an enlarged sectional view of a portion of the cutting tool of Fig. 11;
Fig. 13 is a plan view of a portion of the cutting tool;
Fig. 14 is a perspective view of an oil feed piece having an L-shaped oil discharge port;
Fig. 15 is a view showing how the L-shaped oil discharge port is formed;
Fig. 16 is a plan view of an oil feed piece of a variable overhang type;
Fig. 17 is a perspective view of an oil feed piece provided with an oil dispersion preventive wall;
Fig. 18 is a perspective view of another type of oil feed piece provided with an oil dispersion preventive wall; and
Fig. 19 is a graph showing the wear of flank versus the cutting time.

### DETAILED DESCRIPTION OF THE PREFERRED EMBODIMENT

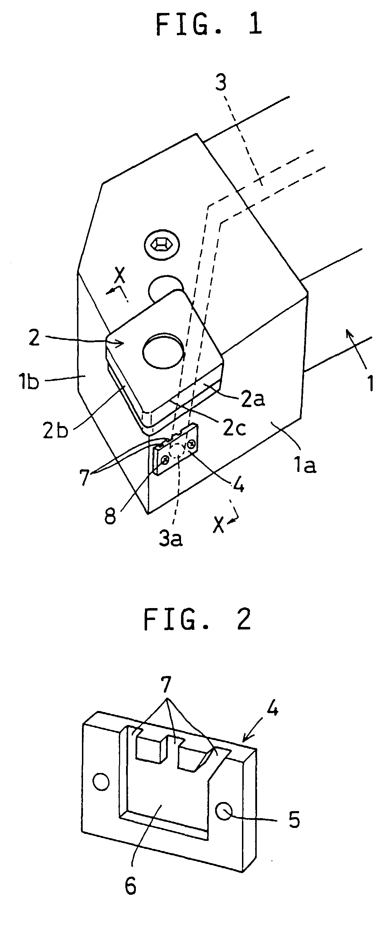

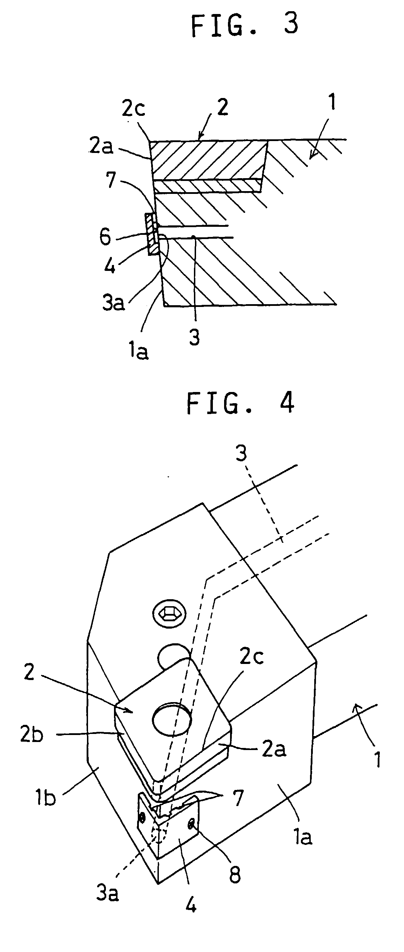

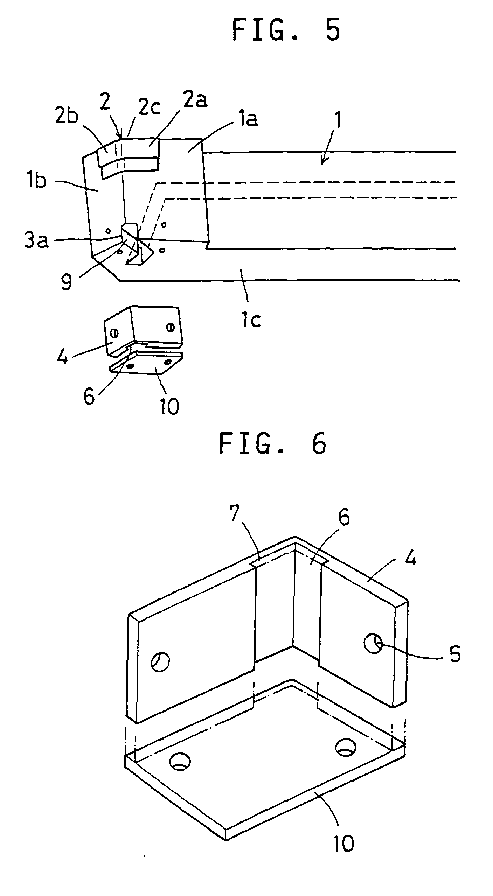

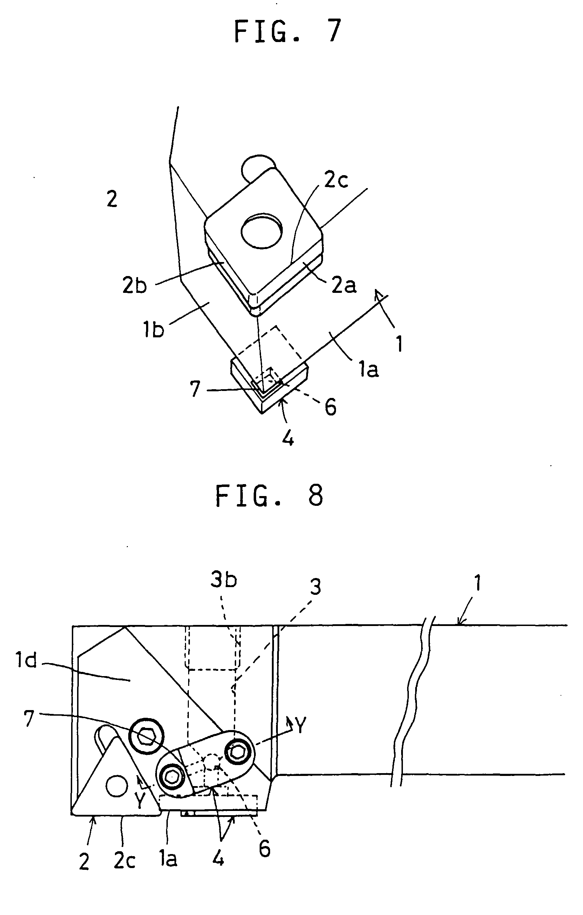

Fig. 1 shows a cutting tool according to this invention, which comprises a body 1, generally called a holder, and a throwaway insert 2 mounted on the body 1. The body 1 has an oil hole 3 formed therein and having an oil inlet (not shown) at the rear end of the body. The oil hole 3 has an outlet 3a opening to a side (side flank) 1a of the body 1 near its front end. A plate member 4 is fixed to the side 1a formed with the outlet 3a by inserting screws 8 through holes 5 formed in the member 4 (Fig. 2) into the body 1.

As shown in Fig. 2, the plate member 4 has a recess 6 in its mounting surface. The outlet 3a of the oil hole 3 communicates with the recess 6 as shown in Fig. 3. Thus, the recess 6 serves as an oil passage between the body 1 and the plate member 4. The recess 6 has oil discharge ports 7 at the top of the plate member 4.

In the embodiment, the oil discharge port 7 comprises a plurality of slits, but it may be a single elongated hole. The plate member 4 need not be rectangular in shape as shown but may be polygonal, circular or of any other shape. Advantageously, its shape is determined taking ease of manufacture into account.

Cutting oil fed into the oil hole 3 flows through its outlet 3a into the recess 6 as the oil passage and is discharged through the oil discharge ports 7 toward the side flank 2a of the insert 2.

Fig. 4 shows another embodiment, in which a plate member 4 is mounted on the body 1 so as to straddle its two adjacent sides 1a and 1b. The outlet 3a of the oil hole 3 is open at the boundary between the two sides 1a and 1b. The plate member 4 is an L-shaped member bent at the corner between the sides 1a, 1b (but may comprise two separate members split at the corner) so that a gap (not shown) as an oil passage is defined between the sides 1a, 1b and the plate member 4. The oil passage has oil discharge ports 7 directed toward the side flank 2a and the front flank 2b of the insert 2. Cutting oil is thus discharged toward the flanks 2a and 2b near the cutting edge 2c.

Fig. 5 shows a different cutting tool of the type in which cutting oil is discharged toward a front flank 2b and a side flank 2a. The oil hole 3 has its outlet 3a open at the bottom 1c of the body 1. A groove 9 is formed to extend from the outlet 3a to the corner at which the sides 1a, 1b and the bottom 1c intersect. A cover plate 10 is fixed (by bolts) to the bottom of the body 1 to oil-tightly close the bottom opening of the groove 9. An L-shaped plate member 4 has a recess 6 which serves as an oil passage between the body 1 and the plate member 4. The oil passage has an oil discharge port 7 (Fig. 6) which is of an L-shaped which corresponds to the nose of the cutting edge 2c.

Fig. 6 shows the plate member 4 of Fig. 5 as viewed from its side at which it is mounted to the body 1. The cover plate 10 may be formed integrally with the plate member 4. But the separate cover plate 10 as shown is preferable because it can be manufactured more easily.

Fig. 7 shows a further embodiment in which a plate member 4 is mounted on the bottom of the body 1 so as to partially protrude outwardly from the bottom of the body 1 (the protruding portion is hereinafter referred to as "overhang"). Part of the recess 6 formed in the plate member 4 at its overhang serves as an L-shaped oil discharge port 7 opposed to the nose portion. While not shown, the oil hole 3 communicates at its outlet with the recess 6.

In this arrangement, cutting oil is supplied to the side flank 2a and the front flank 2b. Since the distance is long from the oil discharge port 7 to the flanks 2a, 2b, an oil dispersion preventive wall (some examples thereof will be shown below) should be provided. Also, it is preferable to provide a means for adjusting the oil discharge pressure by controlling the degree of opening of the oil discharge port 7. (The detailed structure of this means is also described below.)

Figs. 8-10 show another cutting tool having plate members 4 mounted on the top face 1d and side flank 1a of the body 1.

Each plate member 4 has a recess 6 and a small-diameter hole having a diameter of about 1-1.5 mm and communicating with the recess 6. The small-diameter hole has an outlet as an oil discharge port 7. Thus, the plate member 4 itself has the function as a nozzle. The oil discharge port 7 formed in the plate member 4 mounted on the top face of the body 1 is directed toward the nose of the cutting edge 2c so that cutting oil discharged from this port reaches the rake face near the nose. The oil discharge port 7 formed in the plate member 4 mounted on the side 1a is also directed toward the nose so that cutting oil discharged from this port reaches the side flank 2a near the nose.

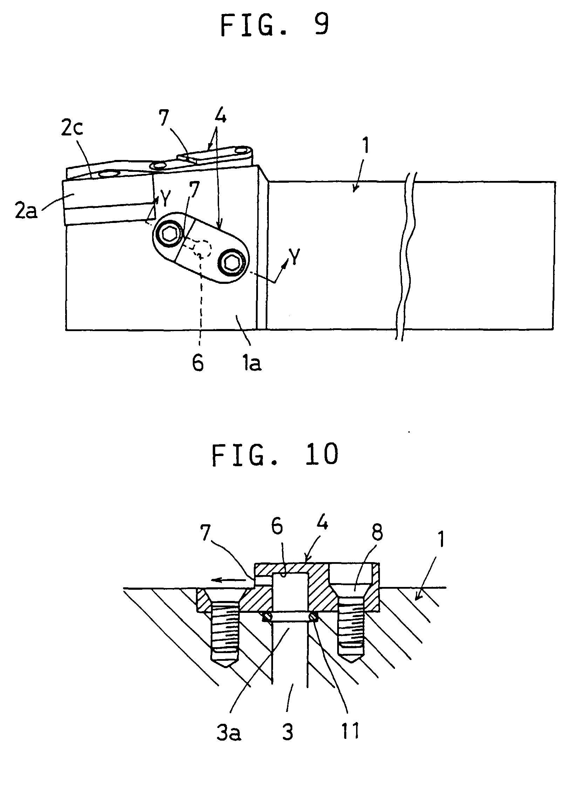

With this arrangement, oil can be discharged at high pressure with high accuracy. The plate members 4 may be provided at locations where they will not interfere with the workpiece and the machine tool (e.g. at the illustrated locations). As shown in Fig. 10, the recess 6 and the connecting portion at the oil hole outlet 3a can be liquid-tightly sealed by ordinary inexpensive O-rings 11.

Also as shown in Fig. 10, the plate members 4 may be partially received in recesses formed in the body 1 to reduce the amount of protrusion and/or to lower the oil discharge ports 7 to such an extent that cutting oil discharged flows barely in contact with the surface of the insert 2. Plate members 4 having their respective oil discharge ports 7 facing in different directions may be used to discharge oil toward any desired target points. The inlet 3b of the oil hole 3 (Fig. 8) opens at the side of the body in this embodiment but may open at the rear face.

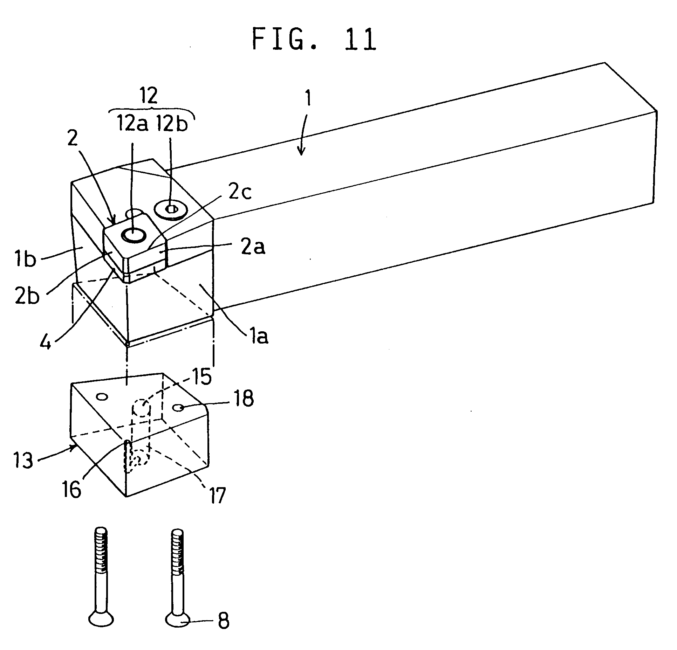

Fig. 11 shows a cutting tool of the second embodiment. This cutting tool is comprised of a body 1, a throwaway insert 2 seated in a groove formed in one corner of the body 1, a clamp means 12 for clamping the insert 2, and an oil feed piece 13.

The illustrated clamp means 12 comprises a disk-headed tightening pin 12a engaged in a center hole formed in the insert 2, and a tightening screw 12b for tightening the pin 12a. (The same clamp means may be used in the other embodiments.) But a different clamp means may be used. The insert 2 is seated through a plate 14. But such a plate 14 is not an essential element in the invention.

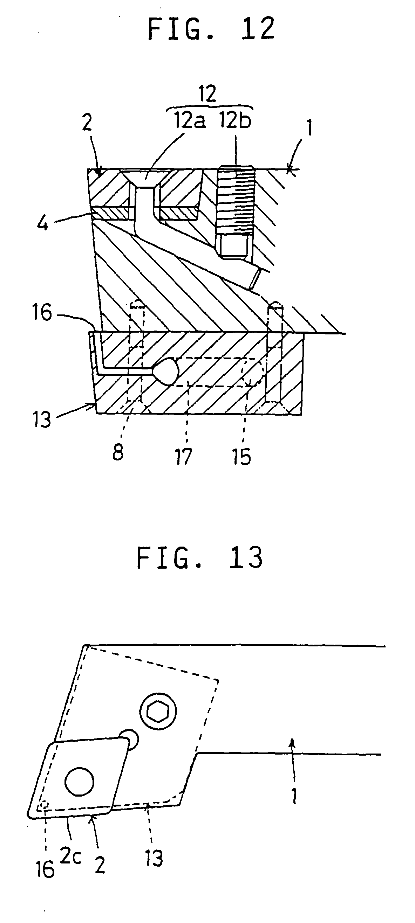

The oil feed piece 13 has an oil inlet 15, an oil discharge port 16, an oil passage 17 connecting the inlet 15 to the oil discharge port 16, and screw holes 18 through which screws 8 are inserted. The oil feed piece 13 is detachably mounted on the body 1 by the screws 8 as shown in Fig. 12. In this state, part of the oil feed piece 13 overhangs outwardly from the bottom edge of the body 1 (overhang).

The oil discharge port 16 is provided at the overhanging portion opposed to the nose of the throwaway insert 2 and opens toward the flank of the nose of the insert 2.

The oil feed piece 13 partially overhangs from the bottom of the body 1. But as viewed from the top side of the cutting tool (Fig. 13), it is inside the cutting edge 2c (as with the aforementioned plate member 4), so that it will in no way hinder cutting operations.

An oil feed pipe (not shown) is connected to the oil inlet 15. Cutting oil is supplied through the oil feed pipe into the oil passage 17 and discharged through the discharge port 16 toward the target point on the flank of the insert.

In any of the embodiments, the sides 1a, 1b of the body have to be shaped and directed so as not to hinder the flow of cutting oil discharged from the oil discharge port 7 or 16. (For example, they may be arranged parallel to the flanks of the insert 2).

The oil discharge port 16 may have the shape of the letter L so as to correspond to the shape of the nose of the insert. In this case, cutting oil is discharged toward both the front flank (2b of Fig. 11) and the side flank (2a of Fig. 11), so that better results will be achieved.

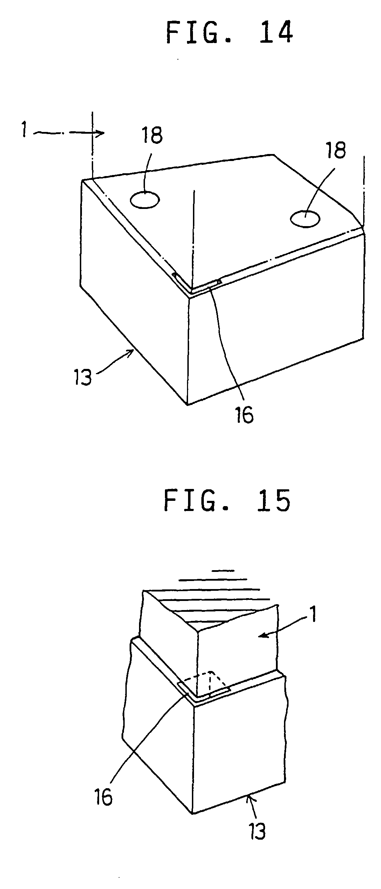

For easier manufacture of the oil feed piece 13, such an L-shaped oil discharge port 16 may be formed by closing part of a square hole with the body 1 as shown in Fig. 15.

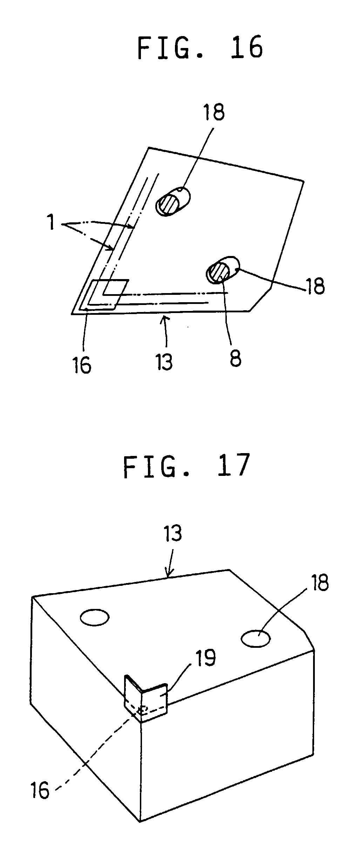

If the screw holes 18 are elongated holes as shown in Fig. 16, it is possible to adjust the overhang of the oil feed piece relative to the bottom of the body by moving the screws 8 in the holes 18. As the overhang of the oil feed piece varies, the degree of opening of oil discharge port 16 changes (irrespective of whether the discharge port is L-shaped or not). By adjusting the degree of opening of the port 16, it is possible to set the oil discharge pressure to an optimum level. Such adjustment is also possible with the cutting tool of Fig. 7.

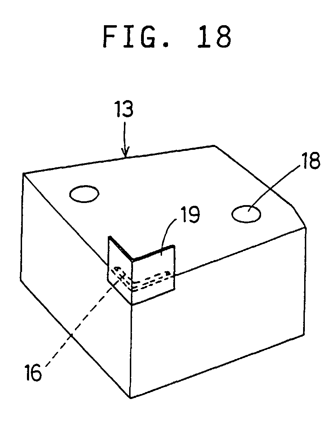

Figs. 17 and 18 show an example in which an oil dispersion preventive wall 19 is provided around the oil discharge port 16.

Under certain oil feed conditions, cutting oil discharged from the oil discharge port 16 may be dispersed. The oil dispersion preventive wall 19 prevents such dispersion of oil, thus minimizing the waste of cutting oil. The oil dispersion preventive wall 19 may be formed integrally with the oil feed piece 13 or may be a metal plate mounted to the oil feed piece 13.

The oil feed piece 13 may be mounted by any means but screwing. But by screwing, the oil feed piece can be mounted most easily (simply by forming threaded holes in the main body). Thus, screwing is the best choice. If the oil feed piece 13 is screwed to the body, one of the two screws can be omitted by providing a positioning means comprising a key and a key groove or a pin and a pin hole.

In the figures, we showed only cutting tools of a throwaway type. But the present invention is also applicable to cutting tools of a brazed type.

### [Examples]

Cutting tools of the type shown in Fig. 11 (specimens of the invention) were prepared. They had an L-shaped oil discharge port as shown in Fig. 15 with a width of 0.5 mm and a total area of 5 mm². The bodies (holders) of these cutting tools were type PCLNR2525 under ISO and the throwaway inserts were CNMG120408 under ISO.

Cutting tools of the same type as above with no oil feed piece were also prepared.

For each of the above specimens, the wear of the flanks of the cutting edge was measured when they were subjected to:
A: dry cutting,
B: ordinary wet cutting (cutting oil feed pressure: 5 kg/cm²),
C: cutting while discharging cutting oil to flanks from a machine turret under pressure of 70 kg/cm², and
D: cutting while discharging cutting oil (under cutting oil supply pressure of 70 kg/cm² ) through cutting tools of the present invention.

### cutting conditions

workpiece: SCM435 (HS36-38)
cutting oil used: water-soluble emulsion type
cutting speed V = 200 m/min.
feed f = 0.3 mm/rev.
depth of cut d = 3.0 mm

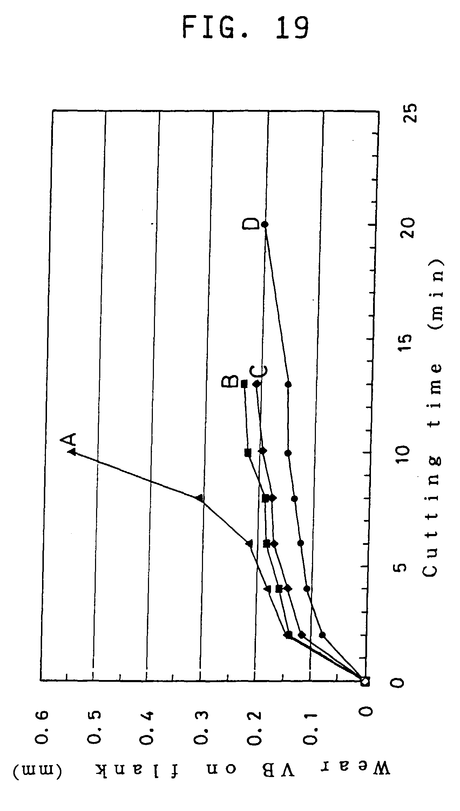

The results of this experiment is shown in Fig. 19. As is apparent from this figure, wear of the flanks was extremely low for the specimens of the invention. The cutting edge life of the cutting tool D (of the invention) was about twice that of the cutting tool B and four times that of the cutting tool A.

As described above, by providing the plate member or oil feed piece, cutting oil can be supplied directly to the rake face and/or flank of the cutting edge without the need of forming a recess in the flank of the cutting insert. This arrangement offers the following advantages.
(1) The cutting edge maintains high strength, so that it is less likely to chip.
(2) An ordinary, inexpensive insert can be used.
(3) The tool body may be a general purpose body for wet or dry cutting, and inserts can be brazed to such a tool body.
(4) Cutting oil is directly supplied to the rake face and flank of the cutting edge, so that the rake face and flank can be cooled and lubricated efficiently. It is thus possible to minimize the wear of the rake face and flank and thus prolong the life of the insert. Also, it is possible to more efficiently dispose of chips and improve the roughness of the finished surface.

In order to further heighten the effect 4), the oil discharge port may be in the form of a slit or a small-diameter aperture, an oil dispersion preventive wall may be provided around the oil discharge port, or an L-shaped oil discharge port may be used to supply oil to a wider area.

By mounting the plate member or oil feed piece so that its overhang from the bottom of the tool body is variable, it is possible to optimally cool and lubricate the intended area by adjusting the oil discharge pressure.

## Claims

1. A cutting tool comprising a body having a cutting edge and an oil hole for supplying cutting oil, and a plate member mounted on a tip of said body and having a recess defining an oil passage between said plate member and said body, said oil hole communicating with said oil passage, said oil passage having an outlet serving as an oil discharge port through which cutting oil is discharged, said oil discharge port being directed toward said cutting edge.

2. A cutting tool as claimed in claim 1 wherein said plate member is mounted on a top face of said body, said oil discharge port being directed toward a cutting edge on a rake face of the body.

3. A cutting tool as claimed in claim 1 wherein said plate member is mounted on a side flank of said body, said oil discharge port being directed toward a cutting edge on the side of a side flank of said body.

4. A cutting tool as claimed in claim 1 wherein said plate member is mounted on a side flank of said body, and on a side adjacent to said side flank side, said oil discharge port being directed toward a cutting edge on the side flank and front flank of said body.

5. A cutting tool as claimed in claim 1 wherein said plate member is mounted on a bottom face of said body, said oil discharge port being provided at an overhanging portion of said plate member protruding from the bottom of said body.

6. A cutting tool as claimed in any of claims 1-5 further comprising a seal for sealing a portion around said oil passage.

7. A cutting tool comprising a body provided with a seat at its tip, a cutting insert mounted on said seat of the body, an oil feed piece mounted on a bottom of said body, said oil feed piece having an inlet for cutting oil and an oil discharge port communicating with said inlet, said oil discharge port being provided at an overhanging portion of said oil feed piece protruding from the bottom of said body, said oil discharge port being directed toward a flank of said cutting insert.

8. A cutting tool as claimed in claim 1 or 7 wherein said plate member or said oil feed piece is located inside the cutting edge as viewed from above the cutting tool.

9. A cutting tool as claimed in claim 4, 5 or 7 wherein said oil discharge port is L-shaped corresponding to the shape of a nose of the cutting edge and directed toward said front flank and side flank near said nose.

10. A cutting tool as claimed in any of claim 1 wherein said oil discharge port is in the form of a slit.

11. A cutting tool as claimed in any of claim 7 wherein said oil discharge port has a diameter of 1-1.5 mm.

12. A cutting tool as claimed in claim 5 or 7 further comprising an oil dispersion preventive wall provided around said oil discharge port for preventing dispersion of cutting oil discharged from said oil discharge port.

13. A cutting tool as claimed in claim 1 or 7 wherein said plate member or said oil feed piece is screwed to said body.

14. A cutting tool as claimed in claim 5 or 7 wherein said plate member or said oil feed piece has elongated holes and is mounted to said body by passing screws through said elongated holes, whereby the overhang of said plate member or said oil feed piece from the holder is adjustable within the range determined by the play of said screws in said elongated holes.
